# EUROPEAN PATENT SPECIFICATION

(11) **EP 0 892 489 B1**
(45) Date of publication and mention of the grant of the patent: **05.10.2005**
(21) Application number: 98202320.2
(22) Date of filing: 09.07.1998
(51) Int. Cl.: H02P 1/00, H02P 6/18, H02P 7/62

(54) **Detection of instantaneous position of the rotor of a brushless DC motor driven in a tripolar mode**
Messung der momentanen Stellung des Rotors eines, im tripolaren Modus getriebenen bürstenlosen Gleichstrommotors
Détection de la position instantanée du rotor d'un moteur à courant continu sans balai commandé en mode tripolaire

(30) Priority: 15.07.1997 EP 97830353
(43) Date of publication of application: 20.01.1999
(73) Proprietor: STMicroelectronics S.r.l., 20041 Agrate Brianza (Milano) (IT)
(72) Inventor: Viti, Marco, 20099 Sesto S. Giovanni (IT); Boscolo, Michele, 30019 Sottomarina (IT); Salina, Alberto, 20051 Limbiate (IT)
(74) Representative: Pellegri, Alberto

(56) References cited:
- EP-A- 0 363 169
- EP-A- 0 482 913
- PATENT ABSTRACTS OF JAPAN vol. 10, no. 125 (E-402) [2182], 10 May 1986 & JP 60 257791 A (HITACHI SEISAKUSHO K.K.), 19 December 1985
- PATENT ABSTRACTS OF JAPAN vol. 97, no. 6, 30 June 1997 & JP 09 047075 A (MATSUSHITA ELECTRIC INDUSTRIAL CO.,LTD.), 14 February 1997
- UHRIG C: "TRAPEZ- ODER SINUSANSTEUERUNG?" ELEKTRONIK, vol. 38, no. 7, 31 March 1989, pages 116-118, XP000024692

## Description

### Field of Application of the Invention

The present invention relates to a method for sensing the instant rotor's position of a DC brushless motor, a necessary requisite for its driving.

### Background of the Invention

The "brushless" motor consists of a permanent magnet rotor and a stator made up of a number of windings that may be connected in a star configuration or completely independent from each other.

In the first case there exist externally a number of terminals equal to the number of motor's phases (eventually +1 if the star center must be accessed); in the second case reference is made to motors with independent phases and both terminals of each winding are available externally.

These motors are used in hard and floppy disk drivers, DVD (digital video disk) drives, in tape videorecorders, CD players, etc..

In the majority of cases, brushless motors are threephase and the driving circuit is generally composed of integrated circuits whose output stages drive the phase windings and may either comprise a threephase full wave half-bridge circuit in the case of motors connected in a star configuration, or three full-bridge circuits in the case of independent phase motors.

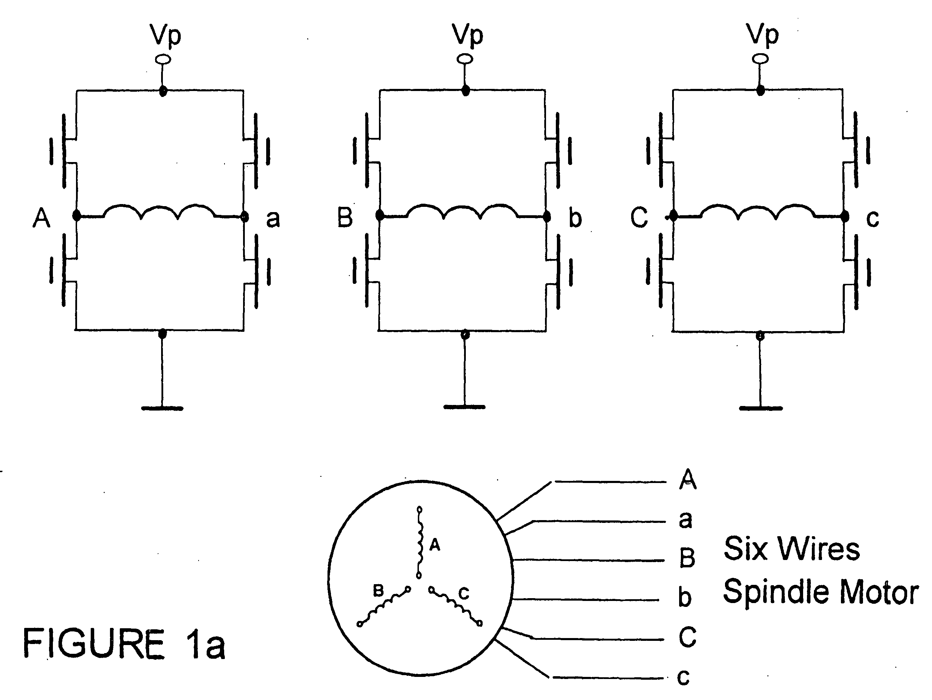

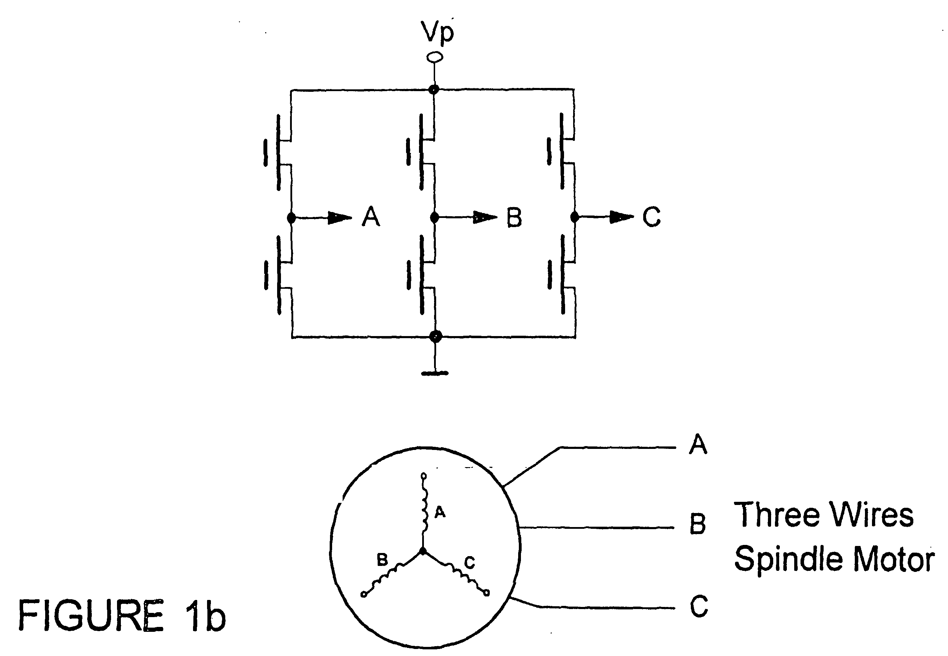

Fig. 1a shows a threephase independent phase brushless motor and the relative independent full-bridge output stages that drive the respective windings, whereas Fig. 1b illustrates the output stage required for driving a threephase brushless motor with windings connected in a star configuration.

By way of simplification, let us consider the typical case of a threephase motor driven in a bipolar mode in which, at each instant, two phase windings are powered while the third phase winding is momentarily unpowered (full-bridge or half-bridge output node in a state of high impedance).

The phases windings are switchingly driven according to a cyclic sequence which must be synchronized with the rotor's instantaneous position which, in a bipolar driving mode, may be determined by analyzing the back-electromotive-force (BEMF) monitored on winding that is momentarily unpowered or sensed by Hall-effect sensors (more expensive solution seldom used). Normally, such a BEMF monitoring detects the zero crossing of the BEMF that has a sinusoidal or in any case periodical waveform, generally referred to as "zero-cross" instant.

The time interval between two successive zero-crosses is indicated with Tc.

Alternative driving modes for this type of motors are respectively the so-called unipolar mode, in which the sensing of the rotor's position may be made in the same way as in the bipolar mode and the so-called tripolar mode, wherein the sensing of the rotor's position cannot be made according to the above noted techniques because all the motor's windings are always powered.

As a matter of fact, in a tripolar mode three voltages (or currents), generally sinusoidal, out-of-phase by 120 electric degrees among each other generating a stator rotating field, are forced on the three windings, respectively, of a threephase motor.

In a tripolar mode, the sensing of the rotor's position generally requires the use of sensors or of electronic circuits that provide a de-facto "reconstruction" of the induced BEMF voltage on the windings, once the motor's electric parameters are known. A solution of this type is disclosed in EP-A-0 822 649 of the same applicant.

An information on the rotor's instantaneous position is necessary for driving a "synchronous" motor such as a brushless motor and it is fundamental for optimizing the driving because the system's efficiency is a function of the phase relationship between the driving voltage (or current) and the rotor's position.

The method for monitoring the instantaneous rotor's position used in a bipolar or in an unipolar driving mode are unsuitable in case of a tripolar mode because each winding is constantly subjected to a driving voltage, thus impeding to monitor the BEMF induced on the winding.

According to the prior art, this inability was overcome by employing position sensors, for example Hall effect sensors or, as an alternative, relatively complex electronic circuits capable of "reconstructing" a BEMF signal once the motor's electric parameters (resistance and inductance) are known.

EP-A-0 482 913 discloses a method comprising the features of the preamble of claim 1.

### Summary of the Invention

The idea behind this invention is that of realizing sensing system of the rotor's position of a multiphase brushless DC motor, driven in a mode as to have all its phase windings powered, based on generating a "temporal window" of brief duration during which the output node of one of the continuously half-bridge stages that drive the respective windings is set to a state of high impedance (or one of the full-bridges in the case of driving a motor having independent phase windings) thus permitting a BEMF detection in the particular phase winding connected to it.

The temporal window may have a constant duration independent of the actual speed of the motor, or a variable duration dependent on the motor's speed or, according to a preferred embodiment, a variable duration dependent on other parameters such as the actual instant of sensing a BEMF zero-cross and the correctness of such a sensed zero-cross instant in respect to the expected instant.

The method of this invention is applicable to both current-mode and voltage-mode driving independently of the periodic waveform of the driving current or voltage used.

The invention is defined by the features of the independent claims. Preferred embodiments are defined in the dependent claims.

### Brief Description of the Drawings

The different aspects and advantages of the method of the invention will become even more evident through the following description of some preferred embodiments and by referring to the attached drawings, wherein:
**Figure 1a** shows a power stage consisting of three full-bridges used for driving threephase brushless DC motors with independent phase windings;
**Figure 1b** shows a threephase full-wave half-bridge power stage driving a threephase brushless DC motor with phase winding connected in a star configuration;
**Figure 2** shows the sinusoidal driving signals (voltages or currents), applied to the respective motor windings and the relative BEMFs induced on the windings by the rotor's rotation;
**Figure 3a** shows a possible temporal window implementation on a single phase, once per electric period, according to the method of the invention;
**Figure 3b** shows an alternative temporal window implementation on a single phase, twice per electric period, according to the method of the invention;
**Figure 3c** shows an alternative temporal window implementation on all three phases, once per electric period, according to the method of the invention;
**Figure 3d** shows an alternative temporal window implementation on all three phases, twice per electric period, according to the method of the invention;
**Figure 4a** shows the drive voltage and BEMF signals relative to a motor's phase winding when the period Tc is correctly estimated with a temporal window of constant duration and the zero-cross assertion signal occurring in the temporal window;
**Figure 4b** shows the same signals of Fig. 4a in a case of overestimation of the Tc;
**Figure 5a** represents the drive voltage and BEMF signals relative to a motor's phase winding when the period Tc is correctly estimated with a temporal window of variable duration in function of the zero-cross sensing instant and of a correct and incorrect estimate of the zero-cross instant;
**Figure 5b** represents the drive voltage and BEMF signals relative to a motor's phase winding when overestimating the period Tc with a temporal window variable duration in function of the zero-cross sensing instant and of a correct and incorrect estimate of the zero-cross instant;
**Figure 5c** represents the drive voltage and BEMF signals relative to a motor's phase winding when overestimating the period Tc with a temporal window variable duration in function of the zero-cross sensing instant and of a correct and incorrect estimate of the zero-cross instant;
**Figure 6** is a block diagram of a circuit implementing the method of the invention;
**Figure 7a** is a circuit diagram of the BEMF DETECT CIRCUIT block of Fig. 6, according to a first embodiment;
**Figure 7b** is a circuit diagram of the BEMF DETECT CIRCUIT block of Fig. 6, according to another embodiment.

### Description of several Embodiments of the Invention

For analyzing the operating principle of the invention let us consider a most common type of brushless motor, the threephase one. The described concepts remain however applicable to any multiphase brushless motor with phase windings connected in a star configuration or independently connected, driven either in a voltage-mode or in a current-mode according to any predefined periodic waveform.

As previously cited, the brushless motor is a "synchronous" one and this implies the necessity of forcing driving currents through the motor's phase windings synchronously to the rotor's position, in order to maximize the torque produced at the shaft, therefore synchronously to the BEMF signals induced in the respective phase windings.

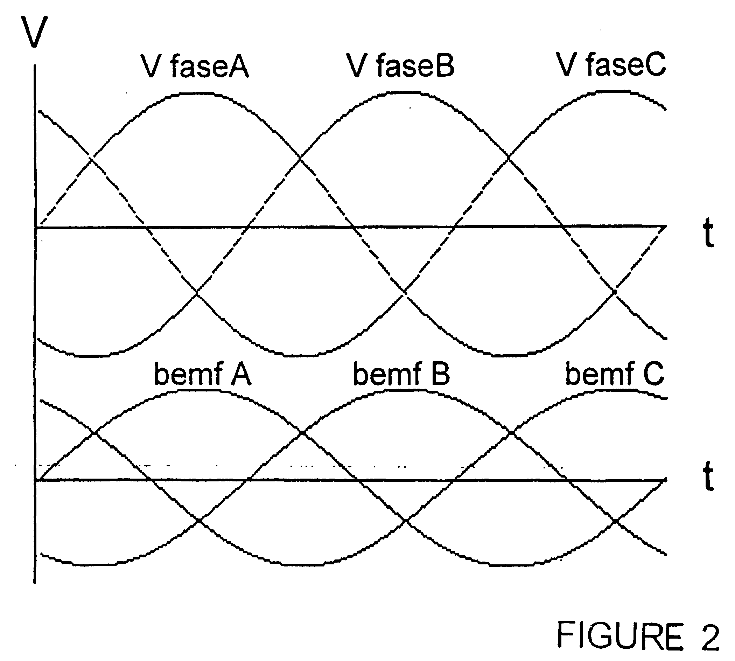

Fig. 2 shows three driving signals (V phase A, V phase B and V phase C), in the example considered having a sinusoidal profile, which are applied to the respective windings.

The choice of a sinusoidal waveform is not the only possible, other periodic waveforms such as a trapezoidal waveform may also be used.

In voltage mode the signals represent voltages; while in current mode the signals represent currents forced through the respective phase windings. Of course, in either case it is fundamental in order to obtain the maximum torque to ensure synchronism of the currents flowing through the phase windings with the rotor's position, that is, with the BEMF voltages induced in the windings by the rotor's rotation, by considering that in the case of a voltage-mode driving there exists a certain phase angle between the drive voltage applied to the windings and the relative currents flowing through them.

As far as the addressed problems and the solution provided by this invention, this distinction between voltage and current modes is substantially irrelevant and in the ensuing description driving signals will not be identified as being either voltage or current signals. Indicatively, Fig. 2 conventionally shows: the relative back-electromotive force signals (bemfA, bemfB and bemfC) in phase with the driving "signals".

More in general, for each sensed zero-cross of an induced back-electro motive force signal, it is necessary to set the driving signal or signals in a manner to keep, between the two type of signals, a certain optimal phase angle (that can be null in the case of current mode signals). ,

In order to simplify the ensuing descriptions, it will be assumed to keep in phase the driving signal with a zero-cross assertion signal of the BEMF voltage monitored on at least one of the phase windings.

The method of detecting the rotor's position of this invention may be implemented alternately either by realizing a temporal window of constant duration or a temporal window whose duration is a function of the motor's speed, or a temporal window whose duration is a function of the instant of detection of a zero-cross (which event determines the end of the temporal window) and of a correct or incorrect estimate of the zero-cross instant (which estimate determines the beginning of the temporal window).

Each type of temporal window is applicable in monitoring the BEMF on a single phase winding (sensing of the zero-cross in only one phase winding) or in monitoring the BEMF on different phase windings (sensing of the zero-cross on several or on all the phase windings). Moreover; it is applicable only once per electric period (sensing of one zero-cross for each BEMF electric period) or twice per electric period (sensing of the zero-cross for both positive and negative gradient of the BEMF for each electric period).

Therefore, in a threephase motor, the number of temporal windows that may be implemented may range from one per electric period (a window per period and for a signal winding) to a maximum of six per electric period (two windows per period and for all three windings).

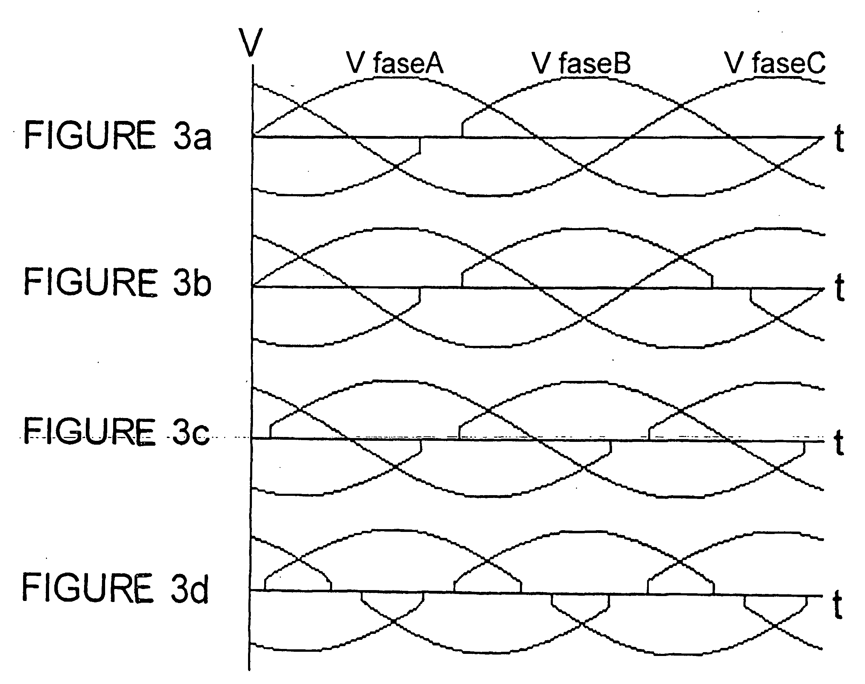

Figures 3a, 3b, 3c, 3d illustrate some examples of realization of such a temporal window.

Fig. 3a illustrates the case of a temporal window in the driving of a phase winding, realized once every electric period. Fig. 3b illustrates the case of a temporal window in the driving of a single phase winding, realized twice every electric period. Fig. 3c illustrates the case of a temporal window in the driving of all three windings, realized once every electric period. Fig. 3d illustrates the case of a temporal window realized twice every electric period in the driving of all three windings.

Let us consider the case of a temporal window realized for a single winding once every electric period and that the zero-cross to be sensed be relative to a positive gradient of the BEMF signal. The following considerations remain however applicable also to any other case.

Let us further assume to be driving the motor in a voltage mode according to a predefined sinusoidal voltage profile, in phase with the BEMF signal and to be at the end of a start-up phase, that is in a situation where the BEMF has already assumed a sufficiently large amplitude to be detectable by ordinary comparator means. ,

### I° Case: Window of constant temporal duration

By assuming to know the value of the last Tc (period of time between two successive zero-cross events) at the end of the start-up, a condition that may be easily assured by setting a sufficiently ample temporal window, it is possible to forecast with a sufficient precision the instant when the next zero-cross shall occur and therefore of the new Tc value.

Eventual forecast errors would be essentially due to imprecisely estimated acceleration or deceleration, however these errors may be recovered by monitoring the BEMF "level" rather than its zero crossing.

If, as supposed, a single window every BEMF's electric period looking for its zero crossing with positive gradient is implemented, a positive BEMF value, at the instant of the opening of the temporal window, is possible only if the new Tc was overestimated, that is, when the zero-cross (ZC) occurs before the start of the temporal window.

This error can be partially recovered by monitoring the level of the BEMF rather than it zero-cross. The expression "SENSED ZC" refers to the signal representative of the BEMF level.

The occurrence of a situation as the above (zero-cross occurring before the start of the temporal window) is used for estimating the new Tc and hence for choosing the starting instant of the next temporal window.

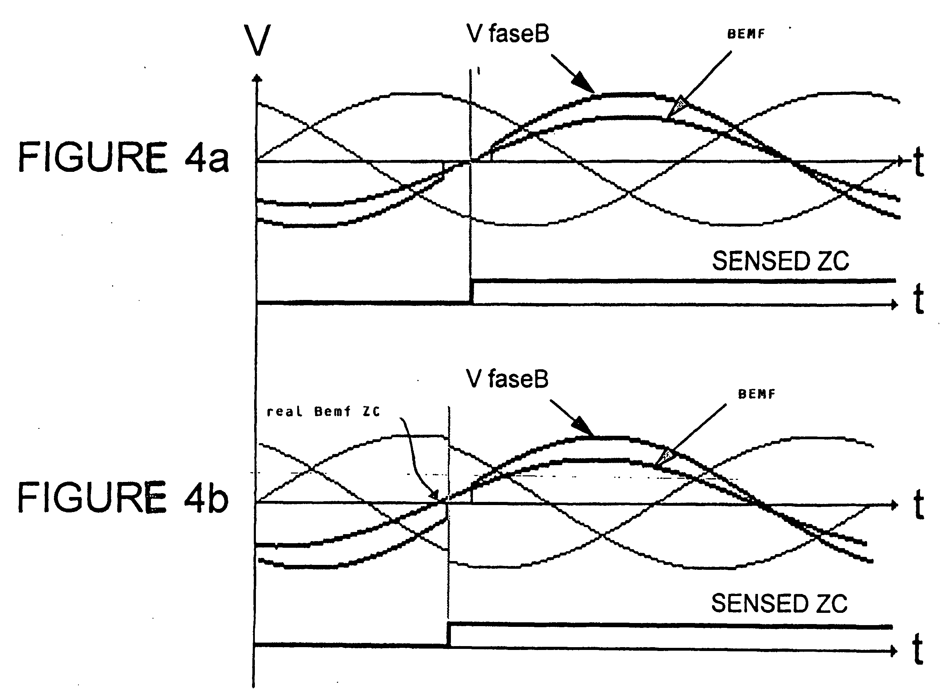

Fig. 4a shows the BEMF and the driving signal relative to a phase winding for the case of a correct Tc estimate with a temporal window of constant duration.

As observed in Fig. 4a, the BEMF zero-cross is detected within the temporal window.

Fig. 4a also reports the "SENSED ZC" signal on the rising front of which (because the BEMF zero-cross being looked for is the one with a positive gradient) it is be assumed that the zero-cross has occurred. Obviously, the updating of the SENSED ZC signal takes place within the temporal window where it is assumed that the zero-cross occurs.

In the case of a correct Tc estimate such a SENSED ZC signal is perfectly in phase with the zero-cross signal.

Fig. 4b shows the driving and BEMF signals relative to a phase winding for the case of an overestimation of Tc.

The SENSED ZC signal will assume a high logic level at the instant of opening of the temporal window because the zero-cross event has already occurred.

Based on the above, it is possible, once the likely values of the accelerations are estimated for the particular application, to set a window of constant temporal duration for sensing of BEMF zero-cross as it occurs or with a negligeable delay in case of estimating errors of the Tc value.

### II° Case: Window of temporal duration in function of the motor's speed

The method remains similar to the one described for the preceding case with the only modification of the window temporal duration that is a function of the speed of the motor. For example, it may be established to realize a window the temporal duration of which is equal to a fixed percentage of the current Tc value.

### III° Case: Window of temporal duration in function of the zero-cross instant and of its correct or incorrect forecast

Also in this case, the start of the window is defined according to the same mechanisms as in the two preceding cases, that is, by estimating the instant when the next zero-cross is expected to occur.

To facilitate a recovery in case of an underestimation of the accelerations, it is still possible to monitor analyze the BEMF level and not just its passage through the zero level.

According to this embodiment, the occurrence of the BEMF zero-cross before the window opens serves to estimate the new Tc and thence to define the starting instant of the next window.

In this embodiment, the closing instant of the window depends on the zero-cross occurrence itself, that is the window is terminated at a certain instant tied to the sensing instant of the zero-cross. The window may terminate at the zero-cross instant or after a preestablished delay.

Thereby, by using the SENSED ZC signal and waiting for its zero-cross to command the closing of the window besides underestimations of accelerations also accidental deceleration are easily recoverable because, once a temporal window is started, it remains open until a zero-cross is detected which in case of a deceleration will take place with a certain delay after the forecast instant.

If at the opening of the window the BEMF level indicates that the expected zero-cross has already taken place, besides an instantaneous updating of the SENSED ZC signal, it is also defined at which instant the window will terminate.

Therefore, the window duration will be determined by the precision with which the zero-cross instant is forecast.

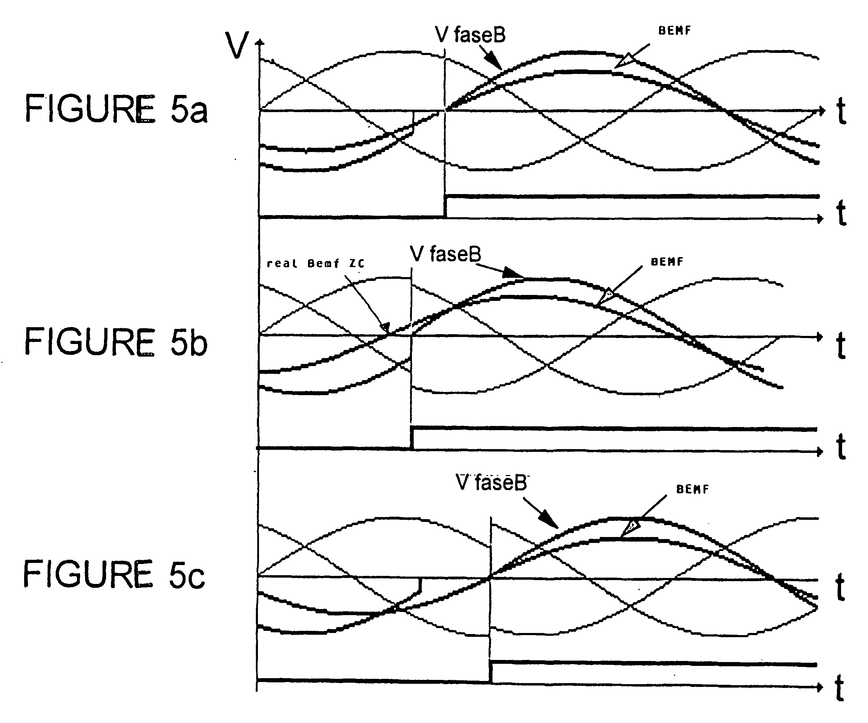

Figures 5a, 5b, and 5c illustrate the functioning according to this embodiment, for the case of a correct estimation of an overestimation and of an underestimation of the new Tc, respectively, for the case in which the end of window is set to coincide with the rising front of the SENSED ZC signal.

This particularly preferred embodiment has the advantage of a substantial absence of critical aspects even during unforeseen accelerations and decelerations of the motor.

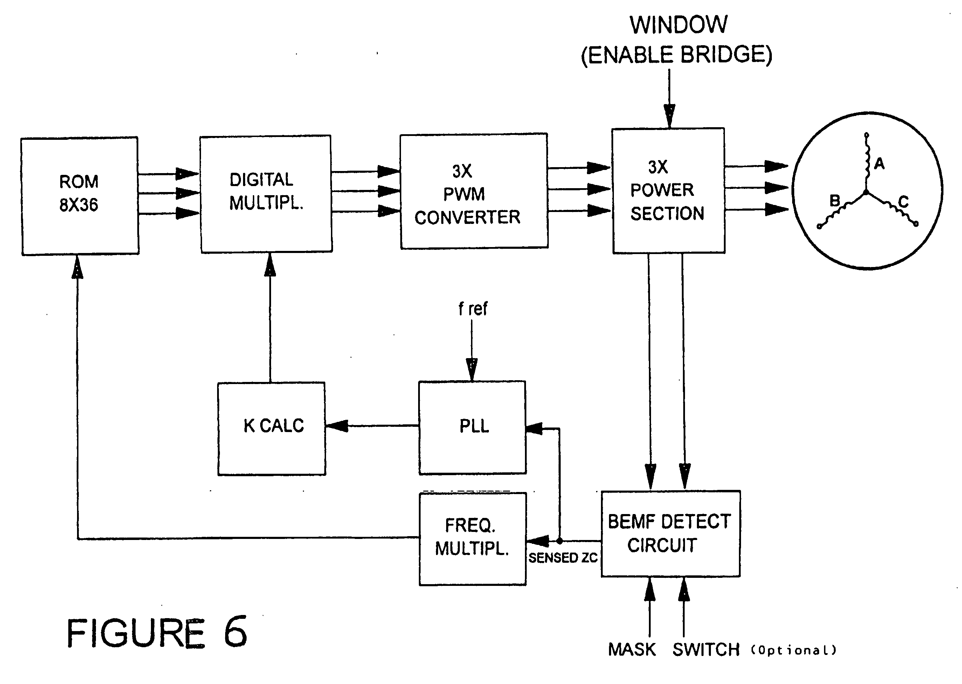

Fig. 6 shows a general block diagram of a circuit implementing the method of the invention for driving a brushless motor.

The diagram refers to the case of a completely digital voltage mode driving, according to which the voltage profiles that are applied to the motor's windings are permanently stored in a ROM memory.

The diagram is a simplification of the one described in EP-A-0 822 649 dated May 22, 1996, by the same applicant. The main functions of the various blocks may be indicated as follows.

The "ROM" block contains the samples of the desired waveform to be applied to the motor's windings.

By supposing to have 36 digital samples to approximate the waveform and to require an 8-bit resolution, then an 8x36 memory will be required.

The block "DIGITAL MULTIPL." multiplies by a constant the digital datum output by the ROM. The constant is calculated by the "K CALC" block in function of the signal output by the "PLL" block, wherein an error signal between the real and the reference speed is generated.

The "PWM CONVERTER" block converts a digital value (byte) into a duty-cycle (PWM). A PWM signal that reproduces the sample value that in that moment is pointed to the ROM memory, multiplied by KVAL, is output.

The "FREQUENCY MULTIPL." block multiplies by 36 the motor's electric frequency (1/Tc). This is necessary because this signal will be used for scanning the ROM memory which stores the voltage profiles (since there are 36 samples, the scanning must occur at a frequency 36 times greater than the motor's electric frequency).

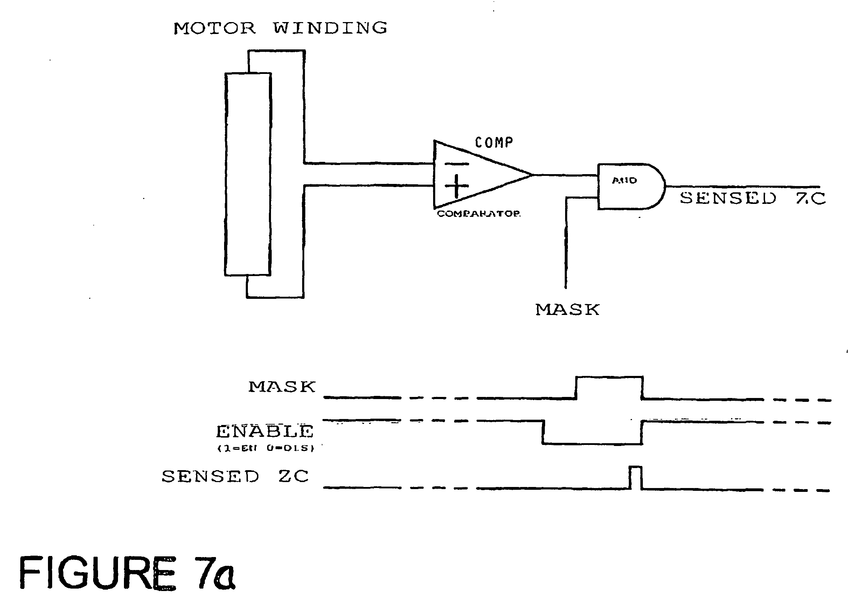

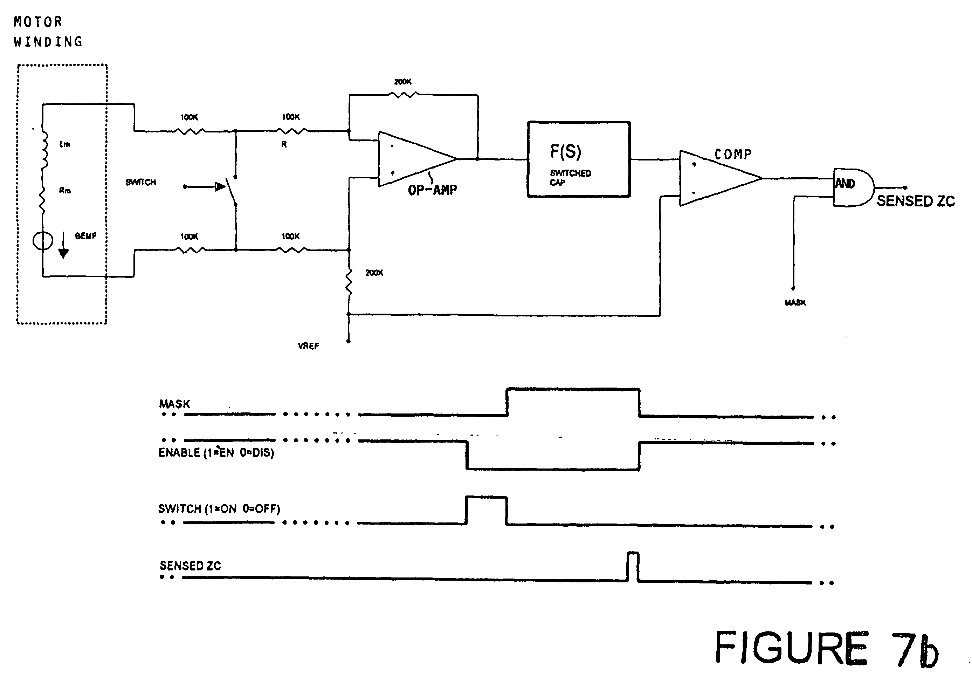

The "WINDOW" signal sets a bridge (or half-bridge) output in a state of high impedance, thus allowing for a zero-cross sensing of a BEMF induced on the winding, which event will be manifested at the output of the "BEMF DETECT CIRCUIT" and affirmed by the logic AND gate , as shown in more details in embodiments shown in Fig. 7a and 7b, respectively.

In a more general case of simply employing a comparator COMP for detecting a zero-cross of the sensed BEMF signal, as depicted in Figure 7a, the block BEMF DETECT CIRCUIT receives the "MASK" signal whose purpose is that of masking spurious assertions of a zero-cross event in correspondence of the beginning of the temporal window that may be caused by an abrupt interruption of the current in the winding.

In applications where the BEMF signal has a particularly low amplitude and/or in exceptionally noisy conditions, an amplifying stage OP-AMP followed by a lowpass filter F(S) may be used for feeding to the input of the comparator COMP an amplified and filtered BEMF signal, as depicted in Figure 7b.

In such an embodiment, in order to prevent spurious assertions that could be due to noise induced by the abrupt current interruption in a motor winding and for preventing excessively large signals at the input of the operational amplifier OP-AMP during the masking period, a third logic command "SWITCH" may be employed to shortcircuit the inputs of the sensing operational amplifier during the masking interval following the activation of the ENABLE command.

Of course, in many situations, the use of an operational amplifier and of a low pass filter and eventually also of the relative disabling command SWITCH may not be necessary and the BEMF signal may be fed directly to the inputs of the comparator COMP, as depicted in Fig. 7a.

For a fully digital system as the one taken into consideration, an efficient temporal window may be realized as follows:
from the forecast instant for a new zero-cross, the window may be set to begin in correspondence of the "n" sample (where n ranges from 1 to 36 as shown in Fig. 6). A zero-cross sensing is then waited for before terminating the window.

Thereafter, if the BEMF zero-cross occurs within the window (that is following a correct estimation of the Tc) the next window opening will be set to occur in correspondence of the "n+1 sample".

If for a temporal window a zero-cross has already occurred, the window will be immediately closed and the SENSED ZC updated as previously described. The occurrence of such a condition will cause the next temporal window to initiate in correspondence of the sample n-1.

This brings to an automatic sizing and positioning of the window along the time axis.

Hence, a mechanism will be active whereby the temporal window will undergo a continuous adjustment about its precise coincidence with the zero-cross event. This mechanism may be checked by fixing a minimum duration of the window.

In a system using 36 samples, when the zero-cross occurs in the proximity of the last sample the window may be set to begin not earlier than the 34th sample.

Any type of temporal window may be realized only for one phase winding (sensing of the zero-cross on a single motor's phase winding) or for more windings (sensing of the zero-cross on more motor phase windings). It may be realized only once per electric period or twice per electric period (for sensing the zero-cross events with both positive and negative gradients every BEMF electric period).

The technique of the invention is applicable to any multiphase brushless motor, with the windings connected in a star configuration or connected independently, driven in voltage-mode or in current-mode and for any predefined waveform.

## Claims

1. Method of sensing the position of the rotor of a multiphase brushless motor equipped with at least a zero-cross detecting circuit of the voltage induced on a respective phase winding of the motor, driven in a multipolar mode, the method comprising
• interrupting the driving current in at least one of the phase windings of the motor coupled with said circuit, by means of a first logic command ;
**characterized by** the following steps:
• enabling logic gate asserting a zero-cross event detected by said circuit after a predetermined time interval from the instant of said interrupting; by means of a second logic command ;
• resetting both said commands after a predetermined period of time from said instant of interrupting.

2. The method of claim 1, **characterizing by** comprising further the following step:
short-circuiting the inputs of a differential amplifier of said sensing circuit for a preestablished period of time from said instant of interrupting, by means of a third logic command.

3. The method of claim 1, in which reset of said first and second commands occurs after a period of time proportional to the instantaneous speed of the motor.

4. The method according to claim 1, in which reset of said first and second commands occurs upon the output of an assertion signal of a zero-cross detection by said logic gate.

5. The method of claim 1, in which each phase winding is coupled to a respective sensing circuit.

6. The method according to claim 1, **characterized in that** said first logic command has a constant and preestablished duration.

7. The method according to claim 1, **characterized in that** said first logic command has a duration equivalent to a constant and preestablished percentage of the phase switching frequency of the motor.

8. The method according to claim 1, **characterized in that** the temporal duration of the interruption of the drive by said first logic command is dynamically regulated in function of a correct or incorrect forecast of the next zero-cross instant.

9. A system for driving a multiphase brushless motor comprising a plurality of power stages driving as many phase windings nonvolatile storage means of a preestablished digitized driving current or voltage waveform for said phase windings, a plurality of digital/analog converters to convert the digital value of each sample of said digitized waveform in an analog driving signal, means for synchronizing the conversions of the samples read from said storage means with a signal representative of the rotor's position, pointing means of each sample of a complete sequence, logic means reconstructing a plurality of mutually out of phase sequences, of said driving current or voltage waveforms, from said stored samples, said synchronizing means comprising a circuit sensing at least a zero-cross of at least a back electromotive force signal induced on a motor's phase winding, **characterized in that** said sensing circuit comprises
a comparator , the input of which is coupled to the voltage present on said phase winding;
first logic means generating a first logic command capable of setting in a condition of a high impedance the output node of the driving stage of said phase winding;
a logic gate for generating a zero-cross assertion signal;
second logic means generating a second command for enabling the output of a zero-cross assertion signal by said logic gate , after a predetermined time interval from the instant of said interruption;
said first and second logic means resetting said first and said second commands after a predetermined period of time.

10. The system according to claim 9, **characterized in that** it comprises further
a differential amplifier having inputs coupled to said phase winding and a low pass switched capacitor filter in cascade of the output of said amplifier feeding an amplified and filtered BEMF signal to the input of said comparator;
third logic means generating a third logic command (SWITCH) for closing for a predetermined interval of time starting from the switching instant of said first logic command , a short-circuiting switch connected across the input nodes of said differential amplifier .

## Patentansprüche

1. Verfahren zur Abtastung der Stellung des Rotors eines bürstenlosen Mehrphasenmotors, der mit mindestens einer Nulldurchgangsdetektionsschaltung der Spannung ausgestattet ist, die an einer jeweiligen Phasenwicklung des Motors induziert wird, der in einer multipolaren Betriebsart betrieben wird, wobei das Verfahren aufweist:
Unterbrechen des Treiberstroms in mindestens einer der Phasenwicklungen des Motors, die mit der Schaltung gekoppelt ist, mittels eines ersten Logikbefehls, **gekennzeichnet durch** die folgenden Schritte:
Freigeben eines Logikglieds, das ein Nulldurchgangsereignis bestätigt, das **durch** die Schaltung detektiert wird, nach einem vorbestimmten Zeitintervall nach dem Moment der Unterbrechung mittels eines zweiten Logikbefehls;
Rücksetzen beider Befehle nach einer vorbestimmten Zeitspanne nach dem Moment der Unterbrechung.

2. Verfahren nach Anspruch 1, **dadurch gekennzeichnet, daß** es ferner den folgenden Schritt aufweist:
Kurzschließen der Eingänge eines Differenzverstärkers der Abtastschaltung für eine vorher festgelegte Zeitspanne nach dem Moment der Unterbrechung mittels eines dritten Logikbefehls.

3. Verfahren nach Anspruch 1, in dem das Rücksetzen der ersten und zweiten Befehle nach einer Zeitspanne stattfindet, die zur Momentandrehzahl des Motors proportional ist.

4. Verfahren nach Anspruch 1, in dem das Rücksetzen der ersten und zweiten Befehle bei der Ausgabe eines Bestätigungssignals einer Nulldurchgangsdetektion durch das Logikglied stattfindet.

5. Verfahren nach Anspruch 1, in dem jede Phasenwicklung mit einer jeweiligen Abtastschaltung gekoppelt ist.

6. Verfahren nach Anspruch 1, **dadurch gekennzeichnet, daß** der erste Logikbefehl eine konstante und vorher festgelegte Dauer aufweist.

7. Verfahren nach Anspruch 1, **dadurch gekennzeichnet, daß** der erste Logikbefehl eine Dauer aufweist, die zu einem konstanten und vorher festgelegten prozentualen Anteil der Phasewechselfrequenz des Motors äquivalent ist.

8. Verfahren nach Anspruch 1, **dadurch gekennzeichnet, daß** die zeitliche Dauer der Unterbrechung des Antriebs durch den ersten Logikbefehl als Funktion einer korrekten oder unkorrekten Vorhersage des nächsten Nulldurchgangsmoments dynamisch geregelt wird.

9. System zum Treiben eines bürstenlosen Mehrphasenmotors, der aufweist: mehrere Leistungsstufen, die ebenso viele Phasenwicklungen treiben, eine nichtflüchtige Speichereinrichtung einer vorher festgelegten digitalisierten Treiberstrom- oder Spannungswellenform für die Phasenwicklungen, mehrere Digital-Analog-Wandler, um den Digitalwert jedes Abtastwerts der digitalisierten Wellenform in ein analoges Treibersignal umzuwandeln, eine Einrichtung zur Synchronisation der Umwandlungen der Abtastwerte, die aus der Speichereinrichtung gelesen werden, mit einem Signal, das für die Stellung des Rotors repräsentativ ist, eine Zeigeeinrichtung jedes Abtastwerts einer vollständigen Sequenz, eine Logikeinrichtung, die mehrere gegenseitig phasenverschobene Sequenzen der Treiberstrom- oder Spannungswellenformen aus den gespeicherten Abtastwerten rekonstruiert, wobei die Synchronisationseinrichtung eine Schaltung aufweist, die mindestens einen Nulldurchgang mindestens eines gegenelektromotorischen Kraftsignals abtastet, das an der Phasenwicklung eines Motors induziert wird, **dadurch gekennzeichnet, daß** die Abtastschaltung aufweist:
einen Komparator, dessen Eingang mit der Spannung gekoppelt ist, die an der Phasenwicklung vorhanden ist;
eine erste Logikeinrichtung, die einen ersten Logikbefehl erzeugt, der imstande ist, den Ausgangsknoten der Treiberstufe der Phasenwicklung in einen hochohmigen Zustand zu versetzen;
ein Logikglied, das ein Nulldurchgang-Bestätigungssignal erzeugt;
eine zweite Logikeinrichtung, die einen zweiten Befehl zur Freigabe der Ausgabe eines Nulldurchgang-Bestätigungssignals durch das Logikglied nach einem vorbestimmten Zeitintervall nach dem Moment der Unterbrechung erzeugt;
wobei die ersten und zweiten Logikeinrichtungen die ersten und die zweiten Befehle nach einer vorbestimmten Zeitspanne rücksetzen.

10. System nach Anspruch 9, **dadurch gekennzeichnet, daß** es ferner aufweist
einen Differenzverstärker, der Eingänge aufweist, die mit der Phasenwicklung gekoppelt sind, und einen geschalteten Tiefpaßkondensatorfilter in Kaskade mit dem Ausgang des Verstärkers, der ein verstärktes und gefiltertes BEMF-Signal dem Eingang des Komparators zuführt;
eine dritte Logikeinrichtung, die einen dritten Logikbefehl (SWITCH) zum Schließen eines Kurzschlußschalters, der über die Eingangsknoten des Differenzverstärkers geschaltet ist, für ein vorbestimmtes Zeitintervall erzeugt, das am Schaltmoment des ersten Logikbefehls beginnt.

## Revendications

1. Procédé de détection de la position du rotor d'un moteur sans collecteur polyphasé équipé d'au moins un circuit de détection de passage à zéro de la tension induite sur un enroulement de phase respectif du moteur piloté en mode unipolaire, ce procédé comprenant :
interrompre le courant d'entraînement dans au moins un des enroulements de phase du moteur couplé audit circuit au moyen d'une première commande logique ;
**caractérisé par** les étapes suivantes :
valider une porte logique confirmant un évènement de passage à zéro détecté par ledit circuit après un intervalle de temps prédéterminé à partir de l'instant de l'interruption, au moyen d'une deuxième commande logique ;
remettre à zéro les deux commandes après une durée prédéterminée à partir de l'instant d'interruption.

2. Procédé selon la revendication 1, **caractérisé en ce qu'**il comprend en outre l'étape consistant à court-circuiter les entrées d'un amplificateur différentiel du circuit de détection pendant une durée prédéterminée à partir de l'instant d'interruption, au moyen d'une troisième commande logique.

3. Procédé selon la revendication 1, dans lequel la remise à zéro des première et deuxième commandes survient après une durée proportionnelle à la vitesse instantanée du moteur.

4. Procédé selon la revendication 1, dans lequel la remise à zéro des première et deuxième commandes survient par suite de la sortie d'un signal de confirmation d'une détection de passage à zéro par la porte logique.

5. Procédé selon la revendication 1, dans lequel chaque enroulement de phase est couplé à un circuit de détection respectif.

6. Procédé selon la revendication 1, **caractérisé en ce que** la première commande logique a une durée constante et prédéterminée.

7. Procédé selon la revendication 1, **caractérisé en ce que** la première commande logique a une durée équivalente à un pourcentage constant et prédéterminé de la fréquence de commutation de phase du moteur.

8. Procédé selon la revendication 1, **caractérisé en ce que** la durée de l'interruption de la commande par la première commande logique est asservie de façon dynamique en fonction d'une prévision correcte ou incorrecte de l'instant de passage à zéro suivant.

9. Système d'entraînement d'un moteur sans collecteur polyphasé comprenant une pluralité d'étages de puissance pilotant autant d'enroulements de phase, un moyen de mémoire non volatil d'une forme d'onde prédéterminée de courant ou de tension de commande numérisée pour les enroulements de phase, une pluralité de convertisseurs numérique-analogique pour convertir la valeur numérique de chaque échantillon de la forme d'onde numérisée en un signal de commande analogique, un moyen de synchronisation des conversions des échantillons lus à partir du moyen de mémoire sur un signal représentatif de la position du rotor, un moyen de pointage de chaque échantillon d'une séquence complète, un moyen logique reconstituant une pluralité de séquences mutuellement déphasées des formes d'onde de courant ou de tension de commande à partir des échantillons mémorisés, le moyen de synchronisation comprenant un circuit détectant au moins un passage à zéro d'au moins un signal de force contre-électromotrice induit sur un enroulement de phase du moteur, **caractérisé en ce que** le circuit de détection comprend :
un comparateur dont l'entrée est couplée à la tension présente sur l'enroulement de phase ;
un premier moyen logique produisant une première commande logique capable de mettre dans un état de haute impédance le noeud de sortie de l'étage de commande de l'enroulement de phase ;
une porte logique pour produire un signal de confirmation de passage à zéro ;
un deuxième moyen logique produisant une deuxième commande pour valider la sortie du signal de confirmation de passage à zéro par la porte logique après un intervalle de temps prédéterminé à partir de l'instant de ladite interruption ;
les premier et deuxième moyens logiques remettant à zéro les première et deuxième commandes après une durée prédéterminée.

10. Système selon la revendication 9, **caractérisé en ce qu'**il comprend en outre :
un amplificateur différentiel ayant des entrées couplées à l'enroulement de phase et un filtre passe-bas à capacités commutées en cascade avec la sortie de l'amplificateur fournissant un signal de force contre-électromotrice amplifié et filtré BEMF à l'entrée du comparateur ;
un troisième moyen logique produisant une troisième commande logique (SWITCH) pour fermer pendant un intervalle de temps prédéterminé en partant de l'instant de commutation de la première commande logique, un commutateur de court-circuit connecté aux bornes des noeuds d'entrée de l'amplificateur différentiel.
